# FASCICULE DE BREVET EUROPEEN

(11) **EP 1 893 444 B1**
(45) Date de publication et mention de la délivrance du brevet: **19.05.2010**
(21) Numéro de dépôt: 06778922.2
(22) Date de dépôt: 09.06.2006
(51) Int. Cl.: B60R 5/04

(54) **AGENCEMENT D'UNE TABLETTE ARRIERE A L'INTERIEUR D'UN VEHICULE AUTOMOBILE**
ANORDNUNG EINES HINTEREN PAKETBRETTS IN EINEM KRAFTFAHRZEUG
ARRANGEMENT OF A REAR PARCEL SHELF INSIDE A MOTOR VEHICLE

(30) Priorité: 15.06.2005 FR 0551632
(43) Date de publication de la demande: 05.03.2008
(73) Titulaire: Renault SAS, 92100 Boulogne Billancourt (FR)
(72) Inventeur: JOSSE, Pascal, F-78500 Sartrouville (FR); CHATELAIN, Eric, F-91210 Draveil (FR)
(86) Numéro de dépôt international: PCT/FR2006/050544
(87) Numéro de publication internationale: WO 2006/134295

(56) Documents cités:
- WO-A-2004/074044
- FR-A- 2 641 506
- FR-A- 2 816 560
- FR-A- 2 850 917
- FR-A- 2 851 528
- FR-A- 2 851 529
- US-A- 5 970 884
- US-B1- 6 394 002

## Description

L'invention concerne un agencement sur un support d'une tablette arrière de véhicule automobile comportant deux coins avant formant chacun une languette de profil curviligne destinée à coopérer avec un logement, dont au moins une portion avant présente la forme d'un arc de cercle, ménagé dans le support, ladite tablette étant montée mobile entre une position d'utilisation et une position d'ouverture.

On connaît, par la publication FR-A-2851529, un agencement sur un support d'une tablette arrière de véhicule automobile amovible dans lequel la tablette comporte à deux de ses coins une languette de profil curviligne apte à coopérer avec un logement complémentaire du support. La tablette est reliée, de manière connue au hayon du véhicule. La tablette est ainsi mobile entre une position d'utilisation dans laquelle la tablette est sensiblement horizontale et une position d'ouverture dans laquelle, sous l'effet de l'ouverture du hayon, la tablette est tirée vers le haut et se soulève.

Cependant, il peut arriver, si l'effort d'ouverture du hayon est important ou trop rapide, que les languettes sortent de manière intempestive de leurs logements et que la tablette soit ainsi désolidarisée du support, ce qui oblige alors l'utilisateur du véhicule à remettre la tablette en place. De plus, l'élasticité des moyens de liaison entre la tablette et le hayon, qui sont souvent des cordons en textile, peut entraîner un rebond de la tablette lors de l'ouverture du hayon et provoquer un mouvement de la tablette en direction de l'utilisateur.

Afin de pallier ces inconvénients, l'invention a pour objet un agencement d'une tablette arrière de véhicule automobile du type décrit ci-dessus dans lequel le démontage accidentel de la tablette lors de l'ouverture du hayon est limité, mais qui puisse être quand même amovible lorsque l'utilisateur le souhaite.

A cet effet, l'invention propose un agencement de tablette arrière du type cité ci-dessus, **caractérisé en ce que** l'agencement comporte un ergot, porté par la languette, qui coopère avec une rainure transversale en forme d'arc de cercle de même centre que l'arc de cercle formé par la portion avant du logement, ménagée dans une paroi inférieure du logement, de manière à éviter le démontage accidentel de la tablette lorsqu'elle est en position d'ouverture.

Selon d'autres caractéristiques de l'invention:
- Lorsque la tablette passe de sa position d'utilisation à sa position d'ouverture, la languette coulisse dans le logement, l'ergot se déplaçant alors en direction d'un bord arrière de la rainure, contre lequel il entre en butée de manière à éviter le démontage accidentel de la tablette.
- Lors du passage de sa position d'ouverture à une position de démontage, la tablette effectue un mouvement vers l'avant de manière à libérer l'ergot de la rainure, puis coulisse le long des parois du logement selon une direction déterminée jusqu'à ce que la languette soit dégagée du logement.
- Le plan de la tablette doit former sensiblement un angle droit avec le rayon passant par le bord arrière de la rainure pour que l'ergot puisse sortir de la rainure.
- L'angle formé par le plan de la tablette en position d'ouverture maximale avec le rayon passant par le bord arrière de la rainure est inférieur à 90°.
- Une portion arrière du logement comporte une paroi supérieure rectiligne.
- Pour faire passer la tablette de sa position de démontage à sa position d'utilisation, la languette, dans un premier temps, glisse selon un mouvement sensiblement rectiligne inverse à la direction de démontage à l'intérieur du logement jusqu'à ce que l'ergot pénètre dans la rainure, puis, dans un deuxième temps, glisse à l'intérieur de la rainure, l'ergot se déplaçant à l'intérieur de la rainure, jusqu'à ce que la tablette soit sensiblement horizontale.

D'autres caractéristiques et avantages de l'invention apparaîtront à la lecture de la description d'exemples de réalisation d'une tablette arrière de véhicule automobile en référence aux dessins annexés dans lesquels :
- La figure 1 est une vue transversale en coupe d'un agencement de tablette selon l'invention en position d'utilisation.
- La figure 2 est une vue transversale en coupe de l'agencement de la figure 1 en position d'ouverture.
- La figure 3 est une vue transversale en coupe de l'agencement de la tablette de la figure 1 en position de démontage.

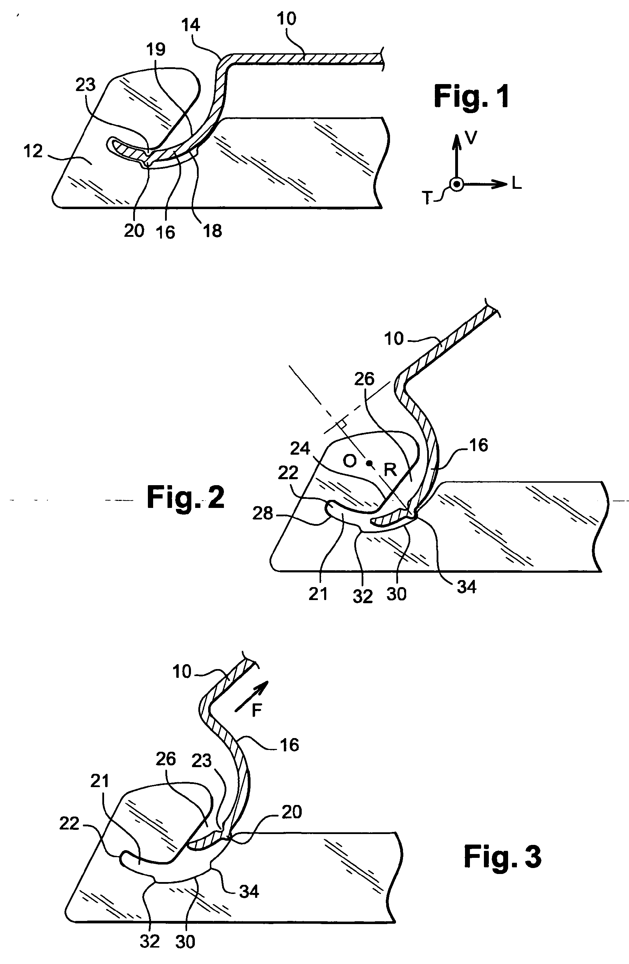

Dans la description qui suit, nous prendrons à titre non limitatif une orientation longitudinale, verticale et transversale indiquée par le trièdre L,V,T de la figure 1.

Nous prendrons également une orientation d'avant en arrière, correspondant au sens de marche du véhicule, l'avant se trouvant à gauche et l'arrière à droite sur les figures.

Tel que représenté à la figure 1, une tablette arrière 10 de véhicule automobile est agencée sur un support transversal 12.

La tablette 10 comporte deux coins avant 14 formant chacun une languette 16 présentant un profil curviligne. Une paroi inférieure 18 de la languette 16 comporte un ergot 20 et une paroi supérieure 19 de la languette comporte un creux 23.

La languette 16 est destinée à coopérer avec un logement 22 ménagé dans le support 12. Au moins une portion avant 21 du logement 22 présente une forme complémentaire de celle de la languette 16, c'est-à-dire un arc de cercle de centre O et de rayon R. Dans le mode de réalisation décrit ici, une paroi supérieure 24 d'une portion arrière 26 du logement 22 est rectiligne.

Une paroi inférieure 28 du logement 22 comporte une rainure transversale 30 destinée à recevoir l'ergot 20. La rainure 30 présente la forme d'un arc de cercle de centre O.

Deux coins arrière (non représentés) de la tablette 10 sont reliés par des moyens tels que des cordons en textile (non représentés) au hayon (non représenté) du véhicule.

La tablette 10 peut occuper une position d'utilisation dans laquelle la tablette 10 est sensiblement horizontale. La languette 16 est alors complètement insérée à l'intérieur du logement 22 et l'ergot 20 se trouve à proximité d'un bord avant 32 de la rainure 30.

La tablette 10, sous l'effet de l'ouverture du hayon peut passer par un coulissement de la languette 16 à l'intérieur du logement 22 de sa position d'utilisation à une position d'ouverture dans laquelle l'ergot 20 est en contact avec un bord arrière 34 de la rainure 30. Le bord arrière 34 de la rainure 30 forme alors une butée qui évite le risque de démontage accidentel de la tablette 10 pendant l'ouverture du hayon. Le degré d'ouverture maximal du hayon étant défini et constant, la tablette 10 ne peut aller au-delà de sa position d'ouverture maximale sous l'effet de la traction du hayon. Sans autre action que celle du hayon, l'ergot 20 ne peut donc pas sortir de la rainure 30.

Cependant, la tablette 10 offre quand même la possibilité d'être amovible lorsque l'utilisateur en a besoin.

Ainsi lorsqu'il souhaite démonter la tablette 10, l'utilisateur désolidarise les cordons puis il fait passer la tablette 10 de sa position d'utilisation à sa position d'ouverture.

Comme représenté à la figure 2, il applique ensuite à la tablette 10 un mouvement vers l'avant, comme par exemple un mouvement de rotation ou de torsion si la tablette 10 présente suffisamment d'élasticité, de manière à dégager l'ergot 20 de la rainure 30. Le mouvement vers l'avant à appliquer à la tablette 10 doit être tel que le plan de la tablette 10 fasse sensiblement un angle droit avec le rayon R passant par le bord arrière 34 de la rainure 30.

Tel que représenté à la figure 3, il tire ensuite sur la tablette 10 selon un mouvement sensiblement rectiligne selon la direction indiquée par la flèche F en faisant coulisser la languette 16 à l'intérieur de la portion arrière 26 du logement 2, en particulier le long de la paroi supérieure 24. Une fois la languette 16 libérée de son logement 22, la tablette 10 est démontée.

Lorsque l'utilisateur souhaite remettre la tablette 10 en place sur son support 12, il insère chaque languette 16 à l'intérieur de son logement 22 en imprimant à la tablette 10 un mouvement rectiligne sensiblement inverse de celui indiqué par la flèche F jusqu'à ce que l'ergot 20 pénètre dans la rainure 30. Ensuite il fait coulisser la languette 16 à l'intérieur du logement 22 en direction du bord avant 32 de la rainure 30 jusqu'à ce que la tablette 10 soit en position horizontale.

Un cran peut être prévu sur la paroi supérieure 24 du logement 22, qui se trouve en regard du creux 23 lorsque la tablette 10 est en position d'utilisation. Ainsi, il forme un point dur lorsque l'extrémité de la languette 16 entre d'abord en contact avec ledit cran, puis se déforme à son passage.

Le cran peut également former une butée à l'extrémité de la languette 16 de façon à améliorer le maintien de la tablette 10 en position d'ouverture.

Enfin, le creux 23 permet ensuite de recevoir le cran lorsque la tablette 10 est en position d'utilisation, ce qui permet aussi d'améliorer son maintien dans cette position.

## Revendications

1. Agencement sur un support d'une tablette arrière (10) de véhicule automobile comportant deux coins avant (14) formant chacun une languette (16) de profil curviligne destinée à coopérer avec un logement (22), dont au moins une portion avant (21) présente la forme d'un arc de cercle de centre (O) et de rayon (R), ménagé dans le support (12), ladite tablette (10) étant montée mobile entre une position d'utilisation et une position d'ouverture, **caractérisé en ce que** l'agencement comporte un ergot (20), porté par la languette (16), qui coopère avec une rainure (30) transversale en forme d'arc de cercle de centre (O), ménagée dans une paroi inférieure (28) du logement (22), de manière à éviter le démontage accidentel de la tablette (10) lorsqu'elle est en position d'ouverture.

2. Agencement d'une tablette (10) selon la revendication 1, **caractérisé en ce que,** lorsque la tablette (10) passe de sa position d'utilisation à sa position d'ouverture, la languette (16) coulisse dans le logement (22), l'ergot (20) se déplaçant alors en direction d'un bord arrière (34) de la rainure (30), contre lequel il entre en butée de manière à éviter le démontage accidentel de la tablette (10).

3. Agencement d'une tablette (10) selon l'une quelconque des revendications 1 ou 2, **caractérisé en ce que,** lors du passage de sa position d'ouverture à une position de démontage, la tablette (10) effectue un mouvement vers l'avant de manière à libérer l'ergot (20) de la rainure (30), puis coulisse le long des parois du logement (22) selon une direction (F) jusqu'à ce que la languette (16) soit dégagée du logement (22).

4. Agencement d'une tablette (10) selon la revendication précédente, **caractérisé en ce que** le plan de la tablette (10) doit former sensiblement un angle droit avec le rayon (R) passant par le bord arrière (34) de la rainure (30) pour que l'ergot (20) puisse sortir de la rainure (30).

5. Agencement d'une tablette (10) selon la revendication précédente, **caractérisé en ce que** l'angle formé par le plan de la tablette (10) en position d'ouverture maximale avec le rayon (R) passant par le bord arrière (34) de la rainure (30) est inférieur à 90°.

6. Agencement d'une tablette (10) selon l'une quelconque des revendications précédentes, **caractérisé en ce qu'**une portion arrière (26) du logement (22) comporte une paroi supérieure (24) rectiligne.

7. Agencement d'une tablette (10) selon l'une quelconque des revendications 3 à 6, **caractérisé en ce que**, pour faire passer la tablette (10) de sa position de démontage à sa position d'utilisation, la languette (16), dans un premier temps, glisse selon un mouvement sensiblement rectiligne inverse à la direction (F) à l'intérieur du logement (22) jusqu'à ce que l'ergot (20) pénètre dans la rainure (30), puis, dans un deuxième temps, glisse à l'intérieur de la rainure (30) jusqu'à ce que, l'ergot (20) se déplaçant à l'intérieur de la rainure (30), la tablette (10) soit sensiblement horizontale.

## Claims

1. Arrangement on a support of a motor vehicle rear parcel shelf (10) having two front corners (14) each forming a tongue (16) having a curved profile and intended to engage in a housing (22), at least a front portion (21) of which is in the form of a circular arc, of centre (0) and radius (R), made in the support (12), said parcel shelf (10) being mounted such that it can move between a use position and an open position, **characterized in that** the arrangement comprises a protrusion (20), borne by the tongue (16), which engages in a transverse groove (30) in the form of a circular arc, of centre (O), made in a lower wall (28) of the housing (22) so as to prevent the accidental disassembly of the parcel shelf (10) when it is in the open position.

2. Arrangement of a parcel shelf (10) according to Claim 1, **characterized in that**, when the parcel shelf (10) passes from its use position into its open position, the tongue (16) slides in the housing (22), the protrusion (20) then moving towards a rear edge (34) of the groove (30), against which it comes into abutment so as to prevent the accidental disassembly of the parcel shelf (10).

3. Arrangement of a parcel shelf (10) according to either of Claims 1 and 2, **characterized in that**, as it moves from its open position into a disassembled position, the parcel shelf (10) performs a forward movement, so as to release the protrusion (20) from the groove (30), and then slides along the walls of the housing (22) in a direction (F) until the tongue (16) is disengaged from the housing (22).

4. Arrangement of a parcel shelf (10) according to the preceding claim, **characterized in that** the plane of the parcel shelf (10) should approximately form a right angle with the radius (R) passing through the rear edge (34) of the groove (30) in order that the protrusion (20) can escape from the groove (30).

5. Arrangement of a parcel shelf (10) according to the preceding claim, **characterized in that** the angle formed by the plane of the parcel shelf (10) in the maximum open position with the radius (R) passing through the rear edge (34) of the groove (30) is less than 90°.

6. Arrangement of a parcel shelf (10) according to any one of the preceding claims, **characterized in that** a rear portion (26) of the housing (22) has a rectilinear upper wall (24).

7. Arrangement of a parcel shelf (10) according to any one of Claims 3 to 6, **characterized in that,** in order to move the parcel shelf (10) from its disassembled position into its use position, the tongue (16) firstly slides, in an approximately rectilinear movement opposite the direction (F), into the housing (22) until the protrusion (20) enters the groove (30), and then secondly slides inside the groove (30) until, with the protrusion (20) moving inside the groove (30), the parcel shelf (10) is approximately horizontal.

## Patentansprüche

1. Anordnung einer hinteren Ablage (10) eines Kraftfahrzeugs auf einer Stütze, mit zwei vorderen Ecken (14), die jeweils eine Zunge (16) mit krummlinigem Profil bilden, die dazu bestimmt ist, mit einer Aufnahme (22) zusammenzuwirken, von der mindestens ein vorderer Abschnitt (21) die Form eines in der Stütze (12) ausgeführten Kreisbogens mit der Mitte (0) und dem Radius (R) hat, wobei die Ablage (10) zwischen einer Gebrauchsposition und einer Öffnungsposition beweglich montiert ist, **dadurch gekennzeichnet, dass** die Anordnung einen von der Zunge (16) getragenen Zapfen (20) umfasst, der mit einer in der unteren Wand (28) der Aufnahme (22) ausgeführten Quernut (30) in der Form eines Kreisbogens mit der Mitte (0) so zusammenwirkt, dass die Ablage (10) nicht versehentlich ausgebaut wird, wenn sie in der Öffnungsposition ist.

2. Anordnung einer Ablage (10) nach Anspruch 1, **dadurch gekennzeichnet, dass** die Zunge (16) in der Aufnahme (22) gleitet, wenn die Ablage (10) aus ihrer Gebrauchsposition in ihre Öffnungsposition geht, wobei sich der Zapfen (20) dann in Richtung eines hinteren Rands (34) der Nut (30) verschiebt, an dem er so anschlägt, dass die Ablage (10) nicht versehentlich ausgebaut wird.

3. Anordnung einer Ablage (10) nach Anspruch 1 oder 2, **dadurch gekennzeichnet, dass** die Ablage (10) eine Bewegung nach vorne durchführt, wenn sie aus ihrer Öffnungsposition in eine Ausbauposition geht, so dass der Zapfen (20) aus der Nut (30) gelöst wird, dann an den Wänden der Aufnahme (22) in einer Richtung (F) entlang gleitet, bis die Zunge (16) aus der Aufnahme (22) ausgerückt ist.

4. Anordnung einer Ablage (10) nach dem vorhergehenden Anspruch, **dadurch gekennzeichnet, dass** die Ebene der Ablage (10) im Wesentlichen einen rechten Winkel mit dem Radius (R) bilden muss, der durch den hinteren Rand (34) der Nut (30) geht, damit der Zapfen (20) aus der Nut (30) austreten kann.

5. Anordnung einer Ablage (10) nach dem vorhergehenden Anspruch, **dadurch gekennzeichnet, dass** der Winkel, den die Ebene der Ablage (10) in der maximalen Öffnungsposition mit dem durch den hinteren Rand (34) der Nut (30) gehenden Radius (R) bildet, kleiner als 90° ist.

6. Anordnung einer Ablage (10) nach einem der vorhergehenden Ansprüche, **dadurch gekennzeichnet, dass** ein hinterer Abschnitt (26) der Aufnahme (22) eine obere geradlinige Wand (24) umfasst.

7. Anordnung einer Ablage (10) nach einem der Ansprüche 3 bis 6, **dadurch gekennzeichnet, dass** die Zunge (16), um die Ablage (10) aus ihrer Ausbauposition in ihre Gebrauchsposition zu versetzen, zuerst in einer im Wesentlichen geradlinigen Bewegung entgegengesetzt der Richtung (F) im Innern der Aufnahme (22) gleitet, bis der Zapfen (20) in die Nut (30) eindringt, und dann im Innern der Nut (30) gleitet, bis die Ablage (10), während sich der Zapfen (20) im Innern der Nut (30) verschiebt, im Wesentlichen horizontal ist.
